Europäisches Patentamt

European Patent Office

Office européen des brevets

(19)

(11) EP 0 534 819 B1

(12) **FASCICULE DE BREVET EUROPEEN**

(45) Date de publication et mention
de la délivrance du brevet:
**08.04.1998 Bulletin 1998/15**

(51) Int Cl.6: **G02B 6/42**, G02B 6/26

(21) Numéro de dépôt: **92402505.9**

(22) Date de dépôt: **14.09.1992**

(54) **Procédé pour limiter les pertes par couplage entre une fibre optique monomode et un système optique de diamétre de mode inférieur ou entre deux fibres optiques monomodes de même diamétre de mode**

Verfahren zur Begrenzung der Kupplungsverluste zwischen einer optischen Monomodefaser und einem optischen System mit einem niedrigeren Modenfleckdurchmesser oder zwischen zwei Monomodefasern mit gleichem Modenfleckdurchmesser

Method for limiting coupling losses between an optical monomode fibre and an optical system having a lower spot size diameter or between two optical monomode fibers having the same spot size diameter

(84) Etats contractants désignés:
**DE FR GB IT NL SE**

(30) Priorité: **16.09.1991 FR 9111364**

(43) Date de publication de la demande:
**31.03.1993 Bulletin 1993/13**

(73) Titulaire: **ALCATEL ALSTHOM COMPAGNIE GENERALE D'ELECTRICITE
75008 Paris (FR)**

(72) Inventeurs:
* **Darbon, Philippe
F-91240 Saint Michel sur Orge (FR)**
* **Grard, Emmanuel
F-91240 Saint Michel sur Orge (FR)**

(74) Mandataire: **Laroche, Danièle et al
c/o ALCATEL ALSTHOM,
Département de Propriété Industrielle,
30, avenue Kléber
75116 Paris (FR)**

(56) Documents cités:
**EP-A- 0 155 379          EP-A- 0 340 042
FR-A- 2 394 102          GB-A- 2 175 411
US-A- 3 819 249**

* **PATENT ABSTRACTS OF JAPAN vol. 7, no. 282 (P-243)(1427) 16 Décembre 1983; & JP-A-58 158 620**

Remarques:
Le dossier contient des informations techniques présentées postérieurement au dépôt de la demande et ne figurant pas dans le présent fascicule.

## Description

La présente invention concerne un procédé pour limiter les pertes de couplage entre une fibre optique monomode de diamètre de mode $W_O$ et un système optique de diamètre de mode $W'_O$ inférieur à $W_O$, ou entre deux fibres optiques monomodes de diamètre de mode $W_O$.

On rappelle ci-dessous les définitions du rayon de mode $W_O$ d'une fibre optique :

$$\frac{W_o}{a} = 0,65 + \frac{1,619}{\sqrt[3]{V}} + \frac{2,879}{V^6}$$

avec :

$$V = \frac{2\pi a}{\lambda} \sqrt{2n\Delta n} \text{ (fréquence normalisée)}$$

a = rayon de coeur

$$n = \frac{n_{coeur} + n_{gaine}}{2}$$

$$\Delta n = n_{coeur} - n_{gaine}$$

Typiquement une fibre optique monomode présente un diamètre de coeur de 8 μm à 10 μm environ, et un diamètre extérieur de gaine de 125 μm environ. L'écart d'indice $\Delta n$ peut être compris entre $5 \times 10^{-3}$ et $50 \times 10^{-3}$ ; la valeur courante est de $5 \times 10^{-3}$ à $16 \times 10^{-3}$.

Il est extrêmement difficile de coupler une telle fibre, notamment avec une diode laser. Pour atteindre un taux de couplage optimal il faudrait réunir deux conditions :

- réaliser au bout de la fibre un dioptre de rayon de courbure extrêmement faible et donc très difficile à obtenir,
- disposer ce dioptre pratiquement au contact de la diode, ce qui est mécaniquement impossible.

A l'heure actuelle le taux de couplage ne dépasse pas 45% à 50%.

Le problème et de créer des moyens assurant un meilleur taux de couplage malgré le maintien d'une distance entre la diode et la fibre qui soit mécaniquement acceptable et des tolérances d'orientation de la fibre vis-à-vis de la diode qui soient réalisables.

Le document JP-A-58 158 620 divulgue un dispositif et une méthode pour coupler une fibre optique monomode à un laser : la fibre optique monomode est soudée à une courte fibre multimode dont l'une des extrémités, faisant face au laser, est rendue sphérique de manière à jouer le rôle d'une lentille. Les fibres sont soudées l'une à l'autre à l'aide d'une décharge électrique produite par une paire d'électrodes. Ensuite, de manière à créer une portion conique au niveau de la zone où les fibres sont soudées entre elles, ces dernières sont tirées dans des directions opposées.

Dans le document EP-A-0 155 379, il s'agit de coupler une fibre optique monomode à un laser semi-conducteur par l'intermédiaire d'une fibre à gradient d'indice, et ce par épissurage sans soudure.

Dans le document EP-A-0 340 042, une méthode de couplage d'une fibre optique monomode à faible ouverture numérique à un laser semiconducteur par l'intermédiaire d'un tronçon de fibre optique monomode à ouverture numérique élevée est décrite.

Le document US-3 818 249 décrit une méthode de couplage entre elles de deux fibres multimodes à gradient d'indice, selon laquelle on effectue un couplage direct, c'est-à-dire sans élément intermédiaire, par traitement thermique au niveau de la zone de couplage, ce traitement thermique entraînant une interdiffusion des matériaux constituant les coeurs et les gaines de ces deux fibres.

Selon un premier aspect, la présente invention a pour objet un procédé pour limiter les pertes de couplage entre une fibre optique monomode de diamètre de mode $W_O$, comprenant un coeur et une gaine optique, et le faisceau issu d'un système optique, de diamètre de mode $W'_O$ inférieur à $W_O$, consistant à raccorder par épissure à l'extrémité de ladite fibre monomode un tronçon de fibre multimode comprenant également un coeur et une gaine optique, ayant une longueur comprise entre 0,1 et 5 mm et un écart d'indice $\Delta n$ compris entre $5.10^{-3}$ et $50.10^{-3}$, et dont la face extrême voisine dudit système optique a la forme d'une surface sphérique convexe, ledit tronçon ayant le même diamètre extérieur de gaine que ladite fibre monomode, l'ensemble constitué par ledit tronçon de fibre multimode muni de sa face extrême convexe et ladite fibre optique monomode ayant un diamètre de mode, mesuré en sortie dudit système optique, sensiblement égal à $W'_O$,

**caractérisé en ce** que ladite épissure de raccordement du tronçon multimode à ladite fibre monomode consiste à effectuer un chauffage, opéré de manière à former au niveau de la zone de jonction desdits coeurs, par interdiffusion radiale et longitudinale des éléments dopants contenus dans lesdits coeurs, un cône de transition adiabatique assurant une adaptation mutuelle des diamètres de mode de ladite fibre monomode et dudit tronçon respectivement.

Il est extrêmement avantageux pour le montage que ledit tronçon de fibre multimode ait le même diamètre extérieur de gaine que la fibre monomode.

L'épissure soudée réalisée entre le tronçon de fibre multimode et la fibre monomode n'entraîne pratiquement qu'une perte inférieure à 0,5 dB. Ceci peut s'expliquer par le fait que, sous l'action de la chaleur, il se crée au niveau de l'épissure un phénomène d'interdiffusion radiale et longitudinale des éléments dopants contenus dans les coeurs des deux fibres concernées. Il en résulte de manière tout à fait surprenante une modification locale et une adaptation mutuelle des deux diamètres de mode correspondants.

Grâce à la mise en oeuvre dudit tronçon de fibre multimode pourvu de sa face extrême convexe on conjugue plus facilement le faisceau de la diode laser avec la fibre monomode. La distance de couplage laser-fibre est notablement plus élevée que dans la disposition antérieure ; elle peut être multipliée par deux ou trois ; le taux de couplage qui en résulte peut être ainsi augmenté de 45% à 70%. La tolérance angulaire ne constitue pas un paramètre difficilement maîtrisable.

Pour optimiser encore le couplage et tenir compte du fait que la section transversale du faisceau laser issu de la diode est légèrement elliptique, il peut être avantageux de choisir ledit tronçon de fibre avec un coeur elliptique au niveau de son extrémité située du côté de la diode laser. Une telle caractéristique peut être obtenue par traitement thermique localisé suivant des génératrices prédéterminées dudit tronçon de fibre.

Selon un second aspect, la présente invention a pour objet un procédé pour limiter les pertes par couplage entre deux fibres monomodes de diamètre de mode $W_O$ raccordées entre elles par l'intermédiaire d'un connecteur,

**caractérisé par le fait que** l'on soude par chauffage sur l'extrémité de chaque fibre monomode un tronçon de fibre multimode comprenant également un coeur et une gaine optique, chacun desdits tronçons étant de longueur comprise entre 0,1 et 5 mm, ayant le même diamètre extérieur de gaine que lesdites fibres monomodes et un écart d'indice $\Delta n$ compris entre $5.10^{-3}$ et $50.10^{-3}$, lesdits tronçons de fibre multimode ayant un diamètre de mode $W''_O$ supérieur à $W_O$, ledit chauffage étant opéré de façon à former au niveau des jonctions desdits coeurs, par interdiffusion radiale et longitudinale des éléments dopants contenus dans lesdits coeurs, un cône de transition adiabatique assurant une adaptation mutuelle des diamètres de mode et des diamètres de coeur de chacune desdites fibres monomodes et desdits tronçons respectivement.

La longueur des tronçons de fibre multimode est suffisamment faible pour que soit conservée pratiquement la propagation monomode à l'intérieur des deux fibres.

La mise en oeuvre d'un tel procédé permet de faciliter de manière importante l'alignement des deux fibres monomodes dans le connecteur ; les tolérances d'alignement sont beaucoup moins sévères que dans un connecteur classique et les pertes de la connexion sont globalement réduites.

D'autres caractéristiques et avantages de la présente invention apparaîtront au cours de la description suivante de modes de réalisation donnés à titre illustratif mais nullement limitatif. Dans le dessin annexé :

-   la figure 1 est un schéma très simplifié d'un couplage entre une diode laser et une fibre monomode, tel qu'il découle du premier procédé selon l'invention,
-   la figure 2A montre en coupe schématique partielle la fibre monomode et le tronçon de fibre multimode de la figure 1 avant réalisation de l'épissure soudée,
-   la figure 2B est analogue à la figure 2A avec l'épissure soudée réalisée,
-   la figure 3 montre schématiquement un faisceau laser de section transversale elliptique,
-   la figure 4 est un schéma simplifié d'un couplage entre deux fibres optiques monomodes par l'intermédiaire d'un connecteur, tel qu'il découle du second procédé selon l'invention.

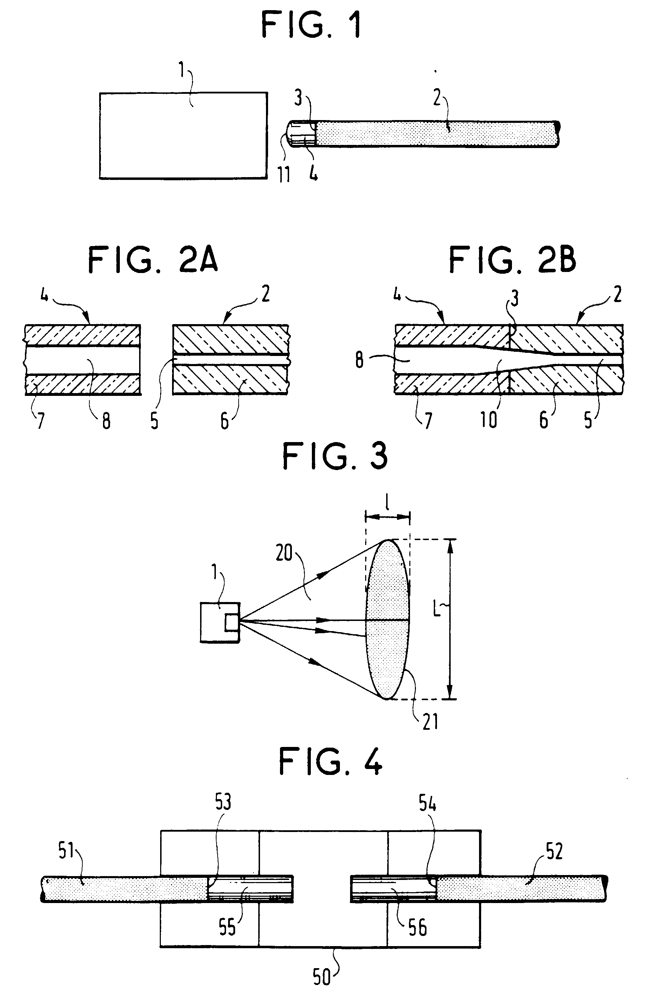

On a représenté dans la figure 1 une diode laser 1 dont le faisceau doit être couplé avec le meilleur rendement possible avec une fibre monomode 2. A titre d'exemple la longueur d'onde d'utilisation se situe dans les domaines de 1,3 μm ou de 1,5 μm.

Le diamètre de mode $W'_O$ de la diode laser 1 est de l'ordre du micromètre.

Les caractéristiques de la fibre monomode 2 sont les suivantes :

-   diamètre de coeur :        8 μm
-   diamètre de mode $W_O$ :        9,5 μm
-   diamètre extérieur de gaine :        125 μm
-   $\Delta n$ :        $5 \times 10^{-3}$

Selon l'invention on soude à l'extrémité de la fibre 2 un tronçon de fibre multimode 4 dont les caractéristiques sont les suivantes :

-   diamètre de coeur :        50 μm
-   longueur :        0,15 mm
-   diamètre extérieur de gaine :        125 μm
-   indice de coeur :        1,4638
-   indice de gaine :        1,4468
-   $\Delta n$ :        $17 \times 10^{-3}$

L'épissure soudée a été référencée 3. On retrouve dans les figures 2A et 2B, avant et après la soudure, la fibre 2 avec sa gaine 6 et son coeur 5 et le tronçon de fibre 4 avec sa gaine 7 et son coeur 8. Lors de la réalisation de l'épissure 3, il se crée au niveau de la zone 10 une interdiffusion adiabatique des dopants des coeurs 5 et 8.

Le chauffage entraîne un accroissement de la taille du coeur 5 en forme de cône adiabatique dont les dimensions sont telles que la fibre 2 conserve son caractère monomode. De même la longueur choisie pour le tronçon 4 permet également de conserver ce caractère monomode.

La face extrême 11 du tronçon de fibre 4 a la forme d'une surface sphérique convexe ayant un rayon de courbure au moins égal 30 μm. Une telle surface peut être réalisée par diverses méthodes connues telles qu'un usinage au laser, un usinage mécanique ou une attaque chimique. Le diamètre de mode du tronçon de fibre 4 muni de sa surface extrême sphérique convexe, lorsqu'il est mesuré en sortie de la diode laser 1, est alors analogue à celui de cette diode laser.

La distance maintenue entre la diode 1 et la face 11 est de l'ordre de 20 µm ; les tolérances en x et y dans un plan perpendiculaire à l'axe optique de l'ensemble sont de l'ordre du micromètre.

Le procédé selon l'invention permet d'accroître le couplage entre la diode 1 et la fibre 2 de 45% à 70% avec des conditions de réglage ne posant pas de problème mécanique notable.

Dans la figure 3 on optimise encore la disposition de la figure 1 en tenant compte du fait que le faisceau 20 issu de la diode 1 a une section transversale elliptique 21 (de dimensions L et 1), avec un rayon de mode $W'_O$ variable de la même manière.

Alors que l'extrémité du tronçon de fibre 3 située du côté de la fibre 2 présente, comme dans l'exemple de la figure 1, une symétrie cylindrique autour de l'axe optique de l'ensemble du système, l'extrémité située du côté de la diode 1 présente une section transversale avec une gaine extérieurement circulaire de diamètre 125 µm et un coeur elliptique de section analogue à la section 21 du faisceau 20.

Dans la figure 4, il s'agit de connecter deux fibres monomodes 51 et 52 de diamètre de mode $W_O$ analogues à la fibre 2 des exemples précédents, par l'intermédiaire d'un connecteur schématisé par la boîte 50. L'alignement des deux fibres est très critique compte tenu de la dimension très faible de leur coeur. Les causes de pertes sont essentiellement le désalignement axial, l'inclinaison et l'écartement.

Selon l'invention on soude en 53 et 54 deux tronçons de fibre 55 et 56 analogues au tronçon 4 de l'exemple 1, mais sans face extrême usinée en surface sphérique convexe. Du fait de la forme en cône adiabatique des coeurs au niveau des épissures et de la faible longueur des tronçons 55 et 56, il n'y a pas de désadaptation modale au niveau du connecteur 50. Les pertes engendrées par les épissures ne sont que de 0,2 dB environ. Par contre, grâce à la valeur plus élevée du diamètre de mode $W''_O$ des deux tronçons de fibre 55 et 56, l'alignement est beaucoup plus aisé et le taux de couplage très amélioré.

## Revendications

1. Procédé pour limiter les pertes par couplage entre une fibre optique monomode (2) de diamètre de mode $W_O$, comprenant un coeur (5) et une gaine optique (6), et le faisceau issu d'un système optique (1), de diamètre de mode $W'_O$ inférieur à $W_O$, consistant à raccorder par épissure à l'extrémité de ladite fibre monomode (2) un tronçon (4) de fibre multimode comprenant également un coeur (8) et une gaine optique (7), ayant une longueur comprise entre 0,1 et 5 mm et un écart d'indice $\Delta n$ compris entre $5.10^{-3}$ et $50.10^{-3}$, et dont la face extrême (11) voisine dudit système optique a la forme d'une surface sphérique convexe, ledit tronçon (4) ayant le même diamètre extérieur de gaine que ladite fibre monomode, l'ensemble constitué par ledit tronçon (4) de fibre multimode muni de sa face extrême convexe et ladite fibre optique monomode (2) ayant un diamètre de mode, mesuré en sortie dudit système optique, sensiblement égal à $W'_O$,
   **caractérisé en ce** que ladite épissure de raccordement du tronçon multimode (4) à ladite fibre monomode (2) consiste à effectuer un chauffage, opéré de manière à former au niveau de la zone (10) de jonction desdits coeurs, par interdiffusion radiale et longitudinale des éléments dopants contenus dans lesdits coeurs, un cône de transition adiabatique assurant une adaptation mutuelle des diamètres de mode de ladite fibre monomode (2) et dudit tronçon (4) respectivement.

2. Procédé selon la revendication 1 **caractérisé en ce que** le rayon de courbure dudit dioptre sphérique est au moins égal à 30 µm.

3. Procédé pour limiter les pertes par couplage entre deux fibres monomodes (51, 52) de diamètre de mode $W_O$ raccordées entre elles par l'intermédiaire d'un connecteur (50),
   **caractérisé par le fait que** l'on soude par chauffage sur l'extrémité de chaque fibre monomode (51, 52) un tronçon (55, 56) de fibre multimode comprenant également un coeur et une gaine optique, chacun desdits tronçons (55, 56) étant de longueur comprise entre 0,1 et 5 mm, ayant le même diamètre extérieur de gaine que lesdites fibres monomodes et un écart d'indice $\Delta n$ compris entre $5.10^{-3}$ et $50.10^{-3}$, lesdits tronçons (55, 56) de fibre multimode ayant un diamètre de mode $W''_O$ supérieur à $W_O$, ledit chauffage étant opéré de façon à former au niveau des jonctions (53, 54) desdits coeurs, par interdiffusion radiale et longitudinale des éléments dopants contenus dans lesdits coeurs, un cône de transition adiabatique assurant une adaptation mutuelle des diamètres de mode et des diamètres de coeur de chacune desdites fibres monomodes (51, 52) et desdits tronçons (55, 56) respectivement.

4. Procédé selon la revendication 3 **caractérisé en ce que** ledit diamètre de mode $W''_O$ est sensiblement égal à deux ou trois fois ledit diamètre de mode $W_O$.

## Patentansprüche

1. Verfahren zur Begrenzung der Koppelverluste zwischen einer optischen Monomodefaser (2) mit einem Modenfleckdurchmesser $W_O$, die einen Kern (5) und einen optischen Mantel (6) umfaßt, und dem aus einem optischen System (1) stammenden Strahl mit einem Modenfleckdurchmesser $W'_O$, der kleiner ist als $W_O$, das darin besteht, durch eine Spleißung am Ende der Monomodefaser (2) einen Abschnitt (4) einer Multimodefaser anzuschließen, der ebenfalls einen Kern (8) und einen optischen Mantel (7) umfaßt, eine Länge zwischen 0,1 und 5 mm und eine Indexdifferenz $\Delta n$ zwischen $5 \times 10^{-3}$ und $50 \times 10^{-3}$ aufweist und dessen an das optische System angrenzende Endfläche (11) die Form einer konvexen sphärischen Oberfläche besitzt, wobei dieser Abschnitt (4) den gleichen Mantelaußendurchmesser wie die Monomodefaser aufweist, wobei die von dem mit der konvexen Endfläche versehenen Multimodefaserabschnitt (4) und der optischen Monomodefaser (2) gebildete Anordnung einen Modenfleckdurchmesser aufweist, der, am Ausgang des optischen Systems gemessen, im wesentlichen gleich $W'_O$ ist, **dadurch gekennzeichnet, daß** die Spleißung für den Anschluß des Multimodeabschnitts (4) an die Monomodefaser (2) darin besteht, eine Erwärmung durchzuführen, die so vorgenommen wird, daß in Höhe der Verbindungszone (10) der Kerne durch gegenseitige radiale und longitudinale Durchdringung der in den Kernen enthaltenen Dotierungselemente ein adiabatischer Übergangskegel gebildet wird, der eine gegenseitige Anpassung der jeweiligen Modenfleckdurchmesser der Monomodefaser (2) und des Abschnitts (4) gewährleistet.

2. Verfahren nach Anspruch 1, **dadurch gekennzeichnet, daß** der Krümmungsradius des sphärischen Diopters mindestens 30 μm beträgt.

3. Verfahren zur Begrenzung der Koppelverluste zwischen zwei Monomodefasern (51, 52) mit einem Modenfleckdurchmesser $W_O$, die mittels eines Verbinders (50) miteinander verbunden sind, **dadurch gekennzeichnet, daß** man durch Erwärmung an das Ende jeder Monomodefaser (51, 52) einen Abschnitt (55, 56) einer Multimodefaser anschweißt, der ebenfalls einen Kern und einen optischen Mantel umfaßt, wobei jeder dieser Abschnitte (55, 56) eine Länge zwischen 0,1 und 5 mm besitzt, den gleichen Mantelaußendurchmesser wie die Monomodefasern und eine Indexdifferenz $\Delta n$ zwischen $5 \times 10^{-3}$ und $50 \times 10^{-3}$ aufweist, wobei die Multimodefaserabschnitte (55, 56) einen Modenfleckdurchmesser $W''_O$ aufweisen, der größer ist als $W_O$, wobei die Erwärmung so vorgenommen wird, daß in Höhe der Verbindungsstellen (53, 54) der Kerne durch gegenseitige radiale und longitudinale Durchdringung der in den Kernen enthaltenen Dotierungselemente ein adiabatischer Übergangskegel gebildet wird, der eine gegenseitige Anpassung der jeweiligen Modenfleckdurchmesser und Kerndurchmesser jeder der Monomodefasern (51, 52) und jedes der Abschnitte (55, 56) gewährleistet.

4. Verfahren nach Anspruch 3, **dadurch gekennzeichnet, daß** der Modenfleckdurchmesser $W''_O$ im wesentlichen dem Zwei- oder Dreifachen des Modenfleckdurchmessers $W_O$ entspricht.

## Claims

1. A method of limiting coupling losses between a monomode optical fiber (2) having a mode diameter of $W_O$, said fiber comprising a core (5) and cladding (6), and the beam emitted from an optical system (1), having a mode diameter of $W'_o$ less than $W_o$, the method consisting in connecting a piece (4) of multimode fiber, also comprising a core (8) and optical cladding (7) to the end of said monomode fiber (2) by splicing, said piece having a length lying in the range 0.1 mm to 5 mm, and an index difference $\Delta n$ lying in the range $5 \times 10^{-3}$ to $50 \times 10^{-3}$, the end face (11) of said piece adjacent to said optical system being in the shape of a convex spherical surface, said piece (4) having cladding with the same outside diameter as said monomode fiber, the assembly constituted by said piece (4) of multimode fiber provided with its convex end face and said monomode optical fiber (2) having a mode diameter substantially equal to $W'_o$, as measured at the outlet from said optical system,
said method being characterized in that said splicing for connecting the multimode piece (4) to said monomode fiber (2) consists in heating, carried out so as to form an adiabatic transition cone at the joint region (10) of said cores by radial and longitudinal interdiffusion of the doping elements contained in said cores, said adiabatic transition cone ensuring mutual matching of the mode diameters of said monomode fiber (2) and of said piece (4) respectively.

2. A method according to claim 1, characterized in that the radius of curvature of said spherical optical surface is not less than 30 μm.

3. A method of limiting coupling losses between two monomode fibers (51, 52) having a mode diameter of $W_o$ and connected together by means of a connector (50), said method being characterized by the fact that a piece (55, 56) of multimode fiber, also comprising a core and optical cladding, is welded by heating onto the end of each monomode fiber (51, 52), each of said pieces (55, 56) having a length lying in the range 0.1 mm to 5 mm, and having cladding with the same outside diameter as said monomode fibers and an index difference $\Delta n$ lying in the range $5 \times 10^{-3}$ to $50 \times 10^{-3}$, said pieces (55, 56) of multimode fiber having a mode diameter $W''_o$ greater than $W_o$, said heating being carried out so as to form an adiabatic transition cone at the joints (53, 54) of said cores by radial and longitudinal interdiffusion of the doping elements contained in said cores, said adiabatic transition cone ensuring mutual matching of the mode diameters and of the core diameters of each of said monomode fibers (51, 52) and of said pieces (55, 56) respectively.

4. A method according to claim 3, characterized in that said mode diameter $W''_o$ is substantially equal to two or three times said mode diameter $W_o$.

# FIG. 1

# FIG. 2A

# FIG. 2B

# FIG. 3

# FIG. 4